# EUROPEAN PATENT APPLICATION

(11) **EP 3 594 472 A1**
(43) Date of publication of application: **15.01.2020**
(21) Application number: 19193901.6
(22) Date of filing: 23.05.2013
(51) Int. Cl.: F02C 3/067, F02K 3/072, F02C 7/36, F02C 3/107

(54) **GAS TURBINE ENGINE WITH A COUNTER ROTATING FAN**

(30) Priority: 31.05.2012 US 201213485035
(62) Divisional of application: 13830416.7
(71) Applicant: United Technologies Corporation, Farmington, CT 06032 (US)
(72) Inventor: LUCAS, James L., Hamden, CT Connecticut 06518 (US)
(74) Representative: Dehns

(57) **Abstract**

A gas turbine engine (20) includes a fan, a compressor section (24), a combustor in fluid communication with the compressor section (24) and a turbine section in fluid communication with the combustor. The fan includes a first plurality of fan blades (100) supported on a first fan support (102) and a second plurality of fan blades (104) supported on a second fan support (106). The first and second fan supports (102,106) are rotatable about a fan axis (A) independently of each other. A geared architecture (48) includes at least one gear (110,114) driven by the turbine section for rotating about a gear axis (G) that is transverse to the fan axis (A). The gear (110,114) drives the fan supports (102,106) for rotating the respective pluralities of fan blades (100,104) in opposite directions.

## Description

### BACKGROUND

A gas turbine engine typically includes a fan section, a compressor section, a combustor section and a turbine section. Air entering the compressor section is compressed and delivered into the combustor section where it is mixed with fuel and ignited to generate a high-speed exhaust gas flow. The high-speed exhaust gas flow expands through the turbine section to drive the compressor and the fan section. The compressor section typically includes low and high pressure compressors, and the turbine section includes low and high pressure turbines.

The high pressure turbine drives the high pressure compressor through an outer shaft to form a high spool, and the low pressure turbine drives the low pressure compressor through an inner shaft to form a low spool. A direct drive gas turbine engine includes a fan section driven by the low spool such that the low pressure compressor, low pressure turbine and fan section rotate at a common speed in a common direction.

A speed reduction device such as an epicyclical gear assembly may be utilized to drive the fan section such that the fan section may rotate at a speed different than the turbine section so as to increase the overall propulsive efficiency of the engine. In such engine architectures, a shaft driven by one of the turbine sections provides an input to the epicyclical gear assembly that drives the fan section at a reduced speed such that the turbine section and the fan section can rotate at closer to respective optimal speeds. However, in such systems that geared architecture itself adds axial length to the engine, which may be undesirable in certain situations.

### SUMMARY

An exemplary gas turbine engine includes a fan, a compressor section, a combustor in fluid communication with the compressor section and a turbine section in fluid communication with the combustor. The fan includes a first plurality of fan blades supported on a first fan support and a second plurality of fan blades supported on a second fan support. The first and second fan supports are rotatable about a fan axis independently of each other. A geared architecture includes at least one gear driven by the turbine section for rotating about a gear axis that is transverse to the fan axis. The gear is configured for driving the first fan support for rotating the first plurality of fan blades in a first direction. The gear is configured for driving the second fan support for rotating the second plurality of fan blades in a second, opposite direction.

In an example embodiment having one or more features of the embodiment of the preceding paragraph, the at least one gear comprises a bevel gear.

In an example embodiment having one or more features of any of the embodiments of the preceding paragraphs, the at least one gear comprises a first gear situated for interacting with the turbine section, the first gear rotates about the gear axis, a second gear is spaced from the first gear and situated for interacting with the first and second fan supports, the second gear rotates about the gear axis, a gear shaft is aligned with the gear axis, the first gear is coupled with the gear shaft near a first end of the gear shaft and the second gear is coupled with the gear shaft near a second, opposite end of the gear shaft such that the first and second gears and the gear shaft rotate together.

In an example embodiment having one or more features of any of the embodiments of the preceding paragraphs, the turbine section comprises a geared component that is rotatable about the fan axis and the first gear is rotatable about the gear axis responsive to rotation of the geared component.

In an example embodiment having one or more features of any of the embodiments of the preceding paragraphs, the geared component is associated with a low pressure spool that is rotatable with the turbine section.

In an example embodiment having one or more features of any of the embodiments of the preceding paragraphs, a plurality of the first gears, the gas turbine engine includes a corresponding plurality of the second gears, and a corresponding plurality of gear shafts. The plurality of first gears are circumferentially spaced from each other about the fan axis.

In an example embodiment having one or more features of any of the embodiments of the preceding paragraphs, the first and second gears each comprise a bevel gear.

In an example embodiment having one or more features of any of the embodiments of the preceding paragraphs, the compressor section comprises a first compressor and a second compressor, the first compressor experiences a lower pressure than the second compressor, there is a spacing between the first compressor and the second compressor in a direction parallel to the fan axis, and the geared architecture is at least partially positioned in the spacing.

In an example embodiment having one or more features of any of the embodiments of the preceding paragraphs, the geared architecture comprises at least one gear component having a length extending along the gear axis in a radial direction relative to the fan axis.

In an example embodiment having one or more features of any of the embodiments of the preceding paragraphs, the first fan support comprises a ring having at least one surface configured to interact with the at least one gear for rotation of the first fan support responsive to rotation of the at least one gear, and the second fan support comprises a ring having at least one surface configured to interact with the at least one gear for rotation of the second fan support responsive to rotation of the at least one gear.

Another exemplary gas turbine engine includes a fan, a compressor section, a combustor in fluid communication with the compressor section and a turbine section in fluid communication with the combustor. The fan includes a first plurality of fan blades supported on a first fan support and a second plurality of fan blades supported on a second fan support. The first and second fan supports are rotatable about a fan axis independently of each other. A geared architecture includes at least one gear driven by the turbine section for rotating about a gear axis that is transverse to the fan axis.

In an example embodiment having one or more features of the embodiment of the preceding paragraph, the geared architecture is at least partially positioned between the first compressor and the second compressor.

In an example embodiment having one or more features of any of the embodiments of the preceding paragraphs, the geared architecture comprises at least one gear component having a length extending along the gear axis in a radial direction relative to the fan axis.

In an example embodiment having one or more features of any of the embodiments of the preceding paragraphs, the fan comprises a first plurality of fan blades supported on a first fan support that is rotatable about the fan axis, and a second plurality of fan blades supported on a second fan support that is rotatable about the fan axis independent of the first plurality of fan blades.

In an example embodiment having one or more features of any of the embodiments of the preceding paragraphs, the at least one gear is configured to drive the first fan support for rotating the first plurality of fan blades in a first direction, and the at least one gear is configured to drive the second fan support for rotating the second plurality of fan blades in a second, opposite direction.

In an example embodiment having one or more features of any of the embodiments of the preceding paragraphs, the at least one gear comprises a first gear situated for interacting with the turbine section, the first gear rotating about the gear axis, a second gear spaced from the first gear and situated for interacting with the first and second fan supports, the second gear rotating about the gear axis, and a gear shaft aligned with the gear axis. The first gear is coupled with the gear shaft near a first end of the gear shaft and the second gear is coupled with the gear shaft near a second, opposite end of the gear shaft such that the first and second gears and the gear shaft rotate together.

In an example embodiment having one or more features of any of the embodiments of the preceding paragraphs, the gas turbine engine includes a plurality of the first gears, a corresponding plurality of the second gears, and a corresponding plurality of gear shafts. The plurality of first gears are circumferentially spaced from each other about the fan axis.

In an example embodiment having one or more features of any of the embodiments of the preceding paragraphs, the turbine section comprises a geared component that rotates about the fan axis and the first gear rotates about the gear axis responsive to rotation of the geared component.

In an example embodiment having one or more features of any of the embodiments of the preceding paragraphs, the geared component is associated with a low pressure spool driven by the turbine section.

In an example embodiment having one or more features of any of the embodiments of the preceding paragraphs, the first and second gears each comprise a bevel gear.

In an example embodiment having one or more features of any of the embodiments of the preceding paragraphs, the first fan support comprises a ring having at least one surface configured to interact with the at least one gear for rotation of the first fan support in a first direction responsive to rotation of the at least one gear, and the second fan support comprises a ring having at least one surface configured to interact with the at least one gear for rotation of the second fan support in a second, opposite direction responsive to rotation of the at least one gear.

The various features and advantages of disclosed examples will become apparent to those skilled in the art from the following detailed description. The drawings that accompany the detailed description can be described as follows.

### BRIEF DESCRIPTION OF THE DRAWINGS

Figure 1 is a schematic view of an example gas turbine engine.
Figure 2 schematically illustrates an example geared architecture and counter rotating fan blades within a gas turbine engine.
Figure 3 schematically illustrates selected portions of the example of Figure 2.
Figure 4 is a view consistent with a cross-sectional illustration taken along the lines 4-4 in Figure 3.

### DETAILED DESCRIPTION

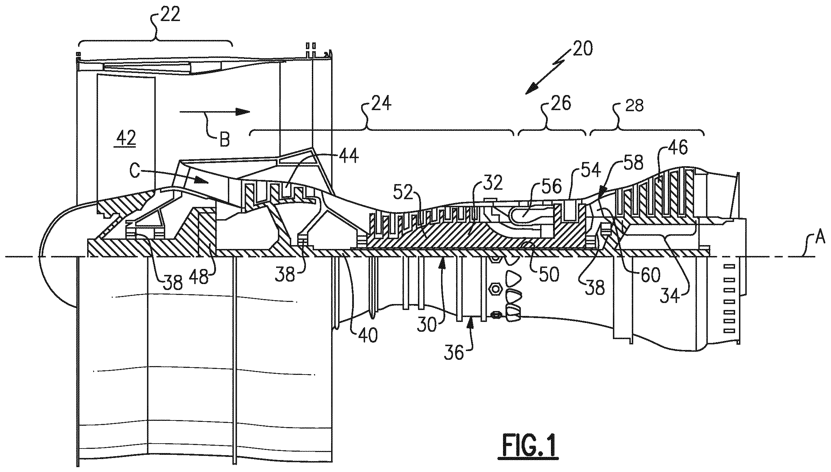

Figure 1 schematically illustrates an example gas turbine engine 20 that includes a fan section 22, a compressor section 24, a combustor section 26 and a turbine section 28. Alternative engines might include an augmenter section (not shown) among other systems or features. The fan section 22 drives air along a bypass flow path B while the compressor section 24 draws air in along a core flow path C where air is compressed and communicated to the combustor section 26. In the combustor section 26, air is mixed with fuel and ignited to generate a high pressure exhaust gas stream that expands through the turbine section 28 where energy is extracted and utilized to drive the fan section 22 and the compressor section 24.

Although the disclosed non-limiting embodiment depicts a turbofan gas turbine engine, it should be understood that the concepts disclosed in this description and the accompanying drawings are not limited to use with turbofans as the teachings may be applied to other types of turbine engines, such as a turbine engine including a three-spool architecture in which three spools concentrically rotate about a common axis and where a low spool enables a low pressure turbine to drive a fan via a gearbox, an intermediate spool that enables an intermediate pressure turbine to drive a first compressor of the compressor section, and a high spool that enables a high pressure turbine to drive a high pressure compressor of the compressor section.

The example engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that connects a fan 42 and a low pressure (or first) compressor section 44 to a low pressure (or first) turbine section 46. The inner shaft 40 drives the fan 42 through a speed change device, such as a geared architecture 48, to drive the fan 42 at a lower speed than the low speed spool 30. The high-speed spool 32 includes an outer shaft 50 that interconnects a high pressure (or second) compressor section 52 and a high pressure (or second) turbine section 54. The inner shaft 40 and the outer shaft 50 are concentric and rotate via the bearing systems 38 about the engine central longitudinal axis A.

A combustor 56 is arranged between the high pressure compressor 52 and the high pressure turbine 54. In one example, the high pressure turbine 54 includes at least two stages to provide a double stage high pressure turbine 54. In another example, the high pressure turbine 54 includes only a single stage. As used in this description, a "high pressure" compressor or turbine experiences a higher pressure than a corresponding "low pressure" compressor or turbine.

The example low pressure turbine 46 has a pressure ratio that is greater than about 5. The pressure ratio of the example low pressure turbine 46 is measured prior to an inlet of the low pressure turbine 46 as related to the pressure measured at the outlet of the low pressure turbine 46 prior to an exhaust nozzle.

A mid-turbine frame 58 of the engine static structure 36 is arranged generally between the high pressure turbine 54 and the low pressure turbine 46. The mid-turbine frame 58 further supports bearing systems 38 in the turbine section 28 and sets airflow entering the low pressure turbine 46.

The core airflow C is compressed by the low pressure compressor 44 then by the high pressure compressor 52 mixed with fuel and ignited in the combustor 56 to produce high speed exhaust gases that are then expanded through the high pressure turbine 54 and low pressure turbine 46. The mid-turbine frame 58 includes vanes 60, which are in the core airflow path and function as an inlet guide vane for the low pressure turbine 46. Utilizing the vane 60 of the mid-turbine frame 58 as the inlet guide vane for low pressure turbine 46 decreases the length of the low pressure turbine 46 without increasing the axial length of the mid-turbine frame 58. Reducing or eliminating the number of vanes in the low pressure turbine 46 shortens the axial length of the turbine section 28. Thus, the compactness of the gas turbine engine 20 is increased and a higher power density may be achieved.

The disclosed gas turbine engine 20 in one example is a high-bypass geared aircraft engine. In a further example, the gas turbine engine 20 includes a bypass ratio greater than about six (6), with an example embodiment being greater than about ten (10). The example geared architecture 48 is an epicyclical gear train, such as a planetary gear system, star gear system or other known gear system, with a gear reduction ratio of greater than about 2.3.

In one disclosed embodiment, the gas turbine engine 20 includes a bypass ratio greater than about ten (10:1) and the fan diameter is significantly larger than an outer diameter of the low pressure compressor 44. It should be understood, however, that the above parameters are only exemplary of one embodiment of a gas turbine engine including a geared architecture and that the present disclosure is applicable to other gas turbine engines.

A significant amount of thrust is provided by the bypass flow B due to the high bypass ratio. The fan section 22 of the engine 20 is designed for a particular flight condition -- typically cruise at about 0.8 Mach and about 35,000 feet. The flight condition of 0.8 Mach and 35,000 ft., with the engine at its best fuel consumption - also known as "bucket cruise Thrust Specific Fuel Consumption ('TSFC')" - is the industry standard parameter of pound-mass (lbm) of fuel per hour being burned divided by pound-force (lbf) of thrust the engine produces at that minimum point.

"Low fan pressure ratio" is the pressure ratio across the fan blade alone, without a Fan Exit Guide Vane ("FEGV") system. The low fan pressure ratio according to one non-limiting embodiment is less than about 1.50. In another non-limiting embodiment the low fan pressure ratio is less than about 1.45.

"Low corrected fan tip speed" is the actual fan tip speed in ft/sec divided by an industry standard temperature correction of [(Tram °R) / 518.7) ^{0.5}]. The "Low corrected fan tip speed", according to one non-limiting embodiment, is less than about 1150 ft/second.

The example gas turbine engine includes the fan 42 that comprises in one non-limiting embodiment less than about 26 fan blades. In another non-limiting embodiment, the fan section 22 includes less than about 20 fan blades. Moreover, in one disclosed embodiment the low pressure turbine 46 includes no more than about 6 turbine rotors schematically indicated at 34. In another non-limiting example embodiment the low pressure turbine 46 includes about 3 turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

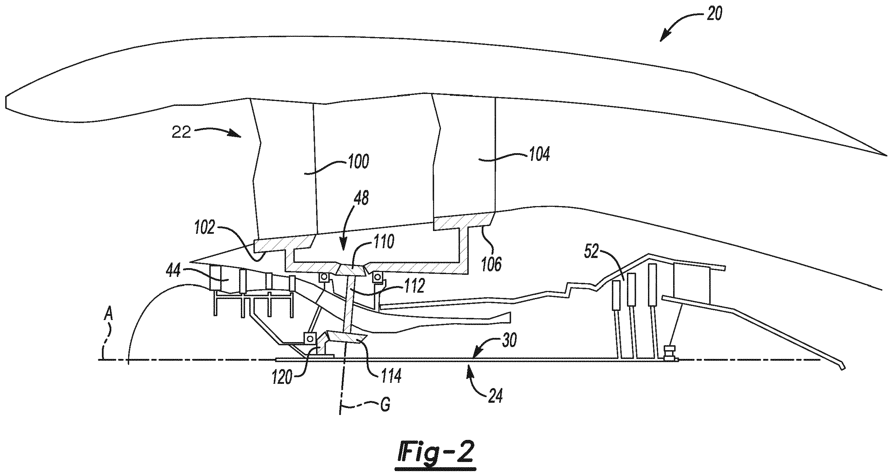

Figure 2 illustrates selected portions of a gas turbine engine 20 including a fan section 22 that has more than one set of fan blades. In this example, a first plurality of fan blades 100 are supported on a first fan support 102 that is situated within the engine 20 for rotation about the axis A, which is referred to as the fan axis A for purposes of discussion. The first fan support 102 comprises a ring-like structure that is centered about the fan axis A. The example fan 42 includes a second plurality of fan blades 104 supported on a second fan support 106. The second plurality of fan blades 104 and the second fan support 106, which comprises a ring-like structure, are situated within the engine 20 for rotation about the fan axis A.

The first fan support 102 and the second fan support 106 may rotate independently of each other. In the illustrated example, the first fan support 102 and the second fan support 106 are situated for rotating in opposite directions such that the fan 22 is a counter rotating fan. The geared architecture 48 is configured to cause rotation of the first fan support 102 in a first direction and the second fan support 106 in a second, opposite direction.

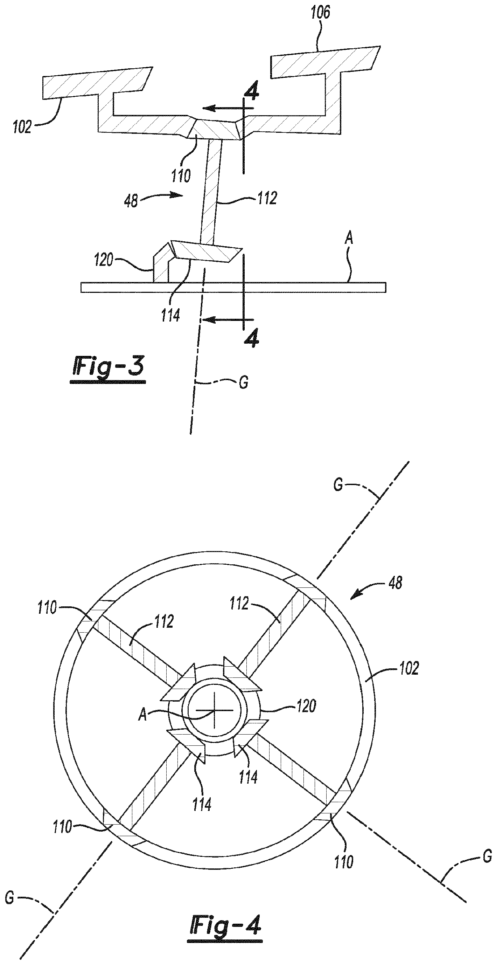

As can be appreciated from Figures 2 and 3, the illustrated geared architecture 48 includes a first gear 110 that interacts with the first fan support 102 and the second fan support 106 through intermeshing gear teeth in one example. As the first gear 110 rotates about a gear axis G, which is transverse to the fan axis A, the fan supports 102 and 106 rotate in opposite directions.

The first gear 110 is coupled with a gear shaft 112 near one end of the gear shaft 112. The gear shaft 112 has a length that is situated along the gear axis G. A second gear 114 is situated near an opposite end of the gear shaft 112. The first gear 110, gear shaft 112 and second gear 114 all rotate in unison.

The illustrated example includes a geared component 120 associated with the low spool 30 such that the geared component 120 rotates about the fan axis A. Rotation of the geared component 120 causes rotation of the second gear 114, which interacts with the geared component 120 through intermeshing gear teeth in one example. The gear shaft 112 and the first gear 110 rotate with the second gear 114. Accordingly, rotation of the low spool 30 about the fan axis A causes rotation of the geared architecture 48 about the gear axis G to cause counter rotation of the first plurality of fan blades 100 and the second plurality of fan blades 104 about the fan axis A. The gears 110 and 114 can be sized to achieve a desired speed reduction between the rotation of the fan blades 100, 104 and the turbine section or low spool 30.

In one example, the gear axis G is approximately perpendicular to the fan axis A. An offset of several degrees from perpendicular is utilized in some embodiments to accommodate the shape of the gears 110 and 114. In the illustrated example, the first gear 110 comprises a bevel gear and the second gear 114 comprises a bevel gear.

One aspect of the example geared architecture 48 that differs from other proposed turbine engine geared architectures is that the gears rotate about the gear axis G, which is transverse to the fan axis A. At least the gear shaft 112 is situated in a generally radial direction relative to the fan axis A.

Figure 4 illustrates an example arrangement of a geared architecture 48. This example includes a plurality of first gears 110, a plurality of gear shafts 112 and a corresponding plurality of second gears 114. The first gears 110 are circumferentially and equally spaced from each other about the axis A. Figure 4 shows the radial alignment of the gear shafts 112 relative to the fan axis A.

One feature of the example shown in Figure 2 is that the geared architecture 48 is situated in a spacing between a first compressor 44 and a second compressor 52 of the compressor section 24. In this example, the entire geared architecture 48 is situated within the spacing between the compressors 44 and 52. The radially-oriented geared architecture 48 allows for more flexibility in the placement of the geared architecture 48 within a gas turbine engine. This flexibility allows for more potential space savings within a gas turbine engine, especially in the axial direction.

The preceding description is exemplary rather than limiting in nature. Variations and modifications to the disclosed examples may become apparent to those skilled in the art that do not necessarily depart from the essence of this invention. The scope of legal protection given to this invention can only be determined by studying the following claims.

## Claims

1. A gas turbine engine, comprising:
a fan that is rotatable about a fan axis;
a compressor section including:
a first compressor that experiences a first pressure; and
a second compressor that experiences a second pressure that is higher than the first pressure, the first compressor being spaced from the second compressor along a direction parallel to the fan axis;
a combustor in fluid communication with the compressor section;
a turbine section in fluid communication with the combustor; and
a geared architecture for rotating the fan about the fan axis, the geared architecture including at least one gear configured to be driven by the turbine section for rotating about a gear axis that is transverse to the fan axis.

2. The gas turbine engine of claim 1, wherein the geared architecture is at least partially positioned between the first compressor and the second compressor.

3. The gas turbine engine of claim 1 or 2, wherein the geared architecture comprises at least one gear component having a length extending along the gear axis in a radial direction relative to the fan axis.

4. The gas turbine engine of any of claims 1 to 3, wherein the fan comprises:
a first plurality of fan blades supported on a first fan support that is rotatable about the fan axis; and
a second plurality of fan blades supported on a second fan support that is rotatable about the fan axis independent of the first plurality of fan blades.

5. The gas turbine engine of claim 4, wherein:
the at least one gear is configured to drive the first fan support for rotating the first plurality of fan blades in a first direction; and
the at least one gear is configured to drive the second fan support for rotating the second plurality of fan blades in a second, opposite direction.

6. The gas turbine engine of claim 5, wherein the at least one gear comprises:
a first gear situated for interacting with the turbine section, the first gear rotating about the gear axis;
a second gear spaced from the first gear and situated for interacting with the first and second fan supports, the second gear rotating about the gear axis; and
a gear shaft aligned with the gear axis, the first gear being coupled with the gear shaft near a first end of the gear shaft and the second gear being coupled with the gear shaft near a second, opposite end of the gear shaft such that the first and second gears and the gear shaft rotate together.

7. The gas turbine engine of claim 6, comprising:
a plurality of the first gears;
a corresponding plurality of the second gears; and
a corresponding plurality of gear shafts, wherein the plurality of first gears are circumferentially spaced from each other about the fan axis.

8. The gas turbine engine of claim 6 or 7, wherein the turbine section comprises a geared component that rotates about the fan axis, and the first gear rotates about the gear axis responsive to rotation of the geared component.

9. The gas turbine engine of claim 8, wherein the geared component is associated with a low pressure spool driven by the turbine section.

10. The gas turbine engine of any of claims 6 to 9, wherein the first and second gears each comprise a bevel gear.

11. The gas turbine engine of any of claims 4 to 10, wherein:
the first fan support comprises a ring having at least one surface configured to interact with the at least one gear for rotation of the first fan support in a first direction responsive to rotation of the at least one gear; and
the second fan support comprises a ring having at least one surface configured to interact with the at least one gear for rotation of the second fan support in a second, opposite direction responsive to rotation of the at least one gear.

12. A gas turbine engine, comprising:
a fan including
a first plurality of fan blades supported on a first fan support that is rotatable about a fan axis, and
a second plurality of fan blades supported on a second fan support that is rotatable about the fan axis independent of the first plurality of fan blades;
a compressor section;
a combustor in fluid communication with the compressor section;
a turbine section in fluid communication with the combustor; and
a geared architecture including at least one gear configured to be driven by the turbine section for rotating about a gear axis that is transverse to the fan axis, the at least one gear being configured for driving the first fan support for rotating the first plurality of fan blades in a first direction, the at least one gear being configured for driving the second fan support for rotating the second plurality of fan blades in a second, opposite direction, wherein the at least one gear optionally comprises a bevel gear.

13. The gas turbine engine of claim 12, wherein the at least one gear comprises
a first gear situated for interacting with the turbine section, the first gear rotating about the gear axis,
a second gear spaced from the first gear and situated for interacting with the first and second fan supports, the second gear rotating about the gear axis, and
a gear shaft aligned with the gear axis, the first gear being coupled with the gear shaft near a first end of the gear shaft and the second gear being coupled with the gear shaft near a second, opposite end of the gear shaft such that the first and second gears and the gear shaft rotate together,
wherein optionally:
the turbine section comprises a geared component that is rotatable about the fan axis; and
the first gear is rotatable about the gear axis responsive to rotation of the geared component, wherein the geared component is further optionally associated with a low pressure spool that is rotatable with the turbine section.

14. The gas turbine engine of claim 14, comprising
a plurality of the first gears,
a corresponding plurality of the second gears, and
a corresponding plurality of gear shafts,
wherein the plurality of first gears are circumferentially spaced from each other about the fan axis; and/ or wherein the first and second gears each comprise a bevel gear.

15. The gas turbine engine of claim 12, wherein:
the compressor section comprises a first compressor and a second compressor,
the first compressor experiences a lower pressure than the second compressor,
there is a spacing between the first compressor and the second compressor in a direction parallel to the fan axis, and
the geared architecture is at least partially positioned in the spacing, wherein the geared architecture optionally comprises at least one gear component having a length extending along the gear axis in a radial direction relative to the fan axis; and/or the first fan support comprises a ring having at least one surface configured to interact with the at least one gear for rotation of the first fan support responsive to rotation of the at least one gear, and
the second fan support comprises a ring having at least one surface configured to interact with the at least one gear for rotation of the second fan support responsive to rotation of the at least one gear.
